(19) **Europäisches Patentamt / European Patent Office / Office européen des brevets**

(11) **EP 3 611 480 B1**

(12) **EUROPEAN PATENT SPECIFICATION**

(45) Date of publication and mention of the grant of the patent:
**13.07.2022 Bulletin 2022/28**

(21) Application number: **18189560.8**

(22) Date of filing: **17.08.2018**

(51) International Patent Classification (IPC):
**G01F 1/667** (2022.01)   **G01F 1/66** (2022.01)
**G01P 5/24** (2006.01)

(52) Cooperative Patent Classification (CPC):
**G01F 1/662; G01F 1/667; G01P 5/245**

(54) **ULTRASONIC FLOWMETER**

ULTRASCHALLFLUSSMESSER

DÉBITMÈTRE À ULTRASONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.02.2020 Bulletin 2020/08**

(73) Proprietor: **Axioma Metering, UAB**
**47190 Kaunas (LT)**

(72) Inventors:
• **Pamakstis, Virgilijus**
  **LT-47161 Kaunas (LT)**
• **Wolyniec, Rimas**
  **LT-53157 Gervenupis, Kauno raj. (LT)**

• **Lengvinas, Gintautas**
  **LT-54307 Giraité, Kauno raj. (LT)**
• **Repsys, Vainius**
  **LT-54123 Raudondvaris, Kauno raj. (LT)**
• **Ragauskas, Arminas**
  **LT-51362 Kaunas (LT)**

(74) Representative: **Cabinet Laurent & Charras**
**Le Contemporain**
**50 Chemin de la Bruyère**
**69574 Dardilly Cedex (FR)**

(56) References cited:
**US-A- 4 232 548      US-A- 5 163 445**
**US-A1- 2007 151 363      US-A1- 2015 323 364**
**US-A1- 2017 211 956**

**Description**

FIELD OF THE INVENTION

The present invention relates to an ultrasonic flow meter. More specifically, the invention relates a flow meter employing two ultrasound transducers with a reflector assembly that are employed to obtain various sequences of time-of-flight measurements to accurately calculate flow.

BACKGROUND OF THE INVENTION

As is well known in the art, ultrasonic flow meters are devices that measure the velocity of a fluid, such as water, flowing therethrough with ultrasound to calculate the volumetric flow rate of the fluid. Often, these flow meters accomplish this by measuring the difference between the time-of-flight of ultrasonic pulses transmitted upstream and downstream relative to the direction of fluid flow. Patent document US 4 232 548 A discloses an ultrasonic flowmeter in which multiple transmission sequences are emitted and different zero cross-over points are used for processing each sequence.

One challenge for existing flow meters is that the zero of the flow meter may drift slightly, for example, due to deterioration of the components over time. Because the flow meter may cease to be properly calibrated as a result of this zero-drift effect, the measurements made by the flow meter will become skewed.

Another challenge for existing flow meters is that the supply of fluid flowing through the flow meter will sometimes change. This dynamic change can result in dynamic error, further compromising the accuracy of the measurements of the flow meter.

What is desired, therefor, is a flow meter that can adapt for a zero-drift effect. What is further desired is a flow meter that can adapt for dynamic changes in the fluid supply.

SUMMARY OF THE INVENTION

Accordingly, it is an object of the present invention to provide a flowmeter that can perform time-of-flight measurements of ultrasound through a fluid in a manner that is not vulnerable to the effect of zero drift.

It is also an object of the present invention to provide a flow meter that can measure very fast changes in the flow of the fluid.

In order to overcome the deficiencies of the prior art and to achieve at least some of the objects and advantages listed, the invention comprises a an ultrasonic flow meter for measuring the flow of a fluid, including a flow tube through which a fluid to be measured flows, a first transducer positioned to transmit an ultrasonic pulse through the fluid flowing through the flow tube, a second transducer positioned to transmit another ultrasonic pulse through the fluid flowing through the flow tube, and a reflector assembly disposed in the flow tube, the reflector assembly configured to reflect the ultrasonic pulse transmitted by the first transducer to the second transducer to provide an upstream pulse having an upstream time time-of-flight, and to reflect the ultrasonic pulse transmitted by the second transducer to the first transducer to provide a downstream pulse having a downstream time-of-flight. A microcontroller is in communication with the first and second transducers such that the microcontroller causes the first and second transducers to transmit the upstream and downstream ultrasonic pulses and generates a measurement of the upstream time-of-flight and the downstream time-of-flight, and the microcontroller obtains a plurality of sequences of said measurement, each sequence comprising at least three measurements of the upstream and downstream time-of-flights, the at least three measurements being of the same measurement type selected from the group of: (a) the time between consecutive rising edges of a pulse emitted from the first transducer and reflected by the reflector assembly to the second transducer, and the time between consecutive rising edges of a subsequent pulse emitted from the second transducer and reflected by the reflector assembly to the first transducer, (b) the time between consecutive falling edges of a pulse emitted from the second transducer and reflected by the reflector assembly to the first transducer, and the time between consecutive falling edges of a subsequent pulse emitted from the first transducer and reflected by the reflector assembly to the second transducer, (c) the time between consecutive rising edges of a pulse emitted from the second transducer and reflected by the reflector assembly to the first transducer, and the time between consecutive rising edges of a subsequent pulse emitted from the first transducer and reflected by the reflector assembly to the second transducer, and (d) the time between consecutive falling edges of a pulse emitted from the first transducer and reflected by the reflector assembly to the second transducer, and the time between consecutive falling edges of a subsequent pulse emitted from the second transducer and reflected by the reflector assembly to the first transducer, where each of said sequences has time-of-flight measurements of a different type than the time-of-flight measurements of the other said sequences. For each of the plurality of sequences, the microcontroller filters said sequence by removing the longest time-of-flight and the shortest time-of-flight from the upstream time-of-flights in said sequence, and removing the longest time-of-flight and the shortest time-of-flight from the downstream time-of-flights in said sequence. The microcontroller calculates the average upstream time-of-flight from the remaining upstream time-of-flights in the plurality of sequences, and calculates the average downstream time-of-flight from the remaining downstream time-of-flights in the plurality of sequences, after filtering said plurality of sequences; and the microcontroller further calculates the volumetric flow rate based on the average upstream time-of-flight and the average downstream time-of-flight.

In certain advantageous embodiments, the microcontroller obtains a sequence employing measurement type (a), a sequence employing measurement type (b), a sequence employing measurement type (c), and a sequence employing measurement type (d).

In some embodiments, each sequence obtained by the microcontroller comprises five measurements of the upstream and downstream time-of-flights. In other embodiments, each sequence obtained by the microcontroller comprises seven measurements of the upstream and downstream time-of-flights, and wherein, for each of the plurality of sequences, the microcontroller further removes the second longest time-of-flight and the second shortest time-of-flight from the upstream time-of-flights in said sequence, and further removes the second longest time-of-flight and the second shortest time-of-flight from the downstream time-of-flights in said sequence.

In certain advantageous embodiments, the reflector assembly includes a reflector housing disposable in the flow tube, the reflector housing comprising a bottom portion having a middle, first and second ends, a first reflecting surface at the first end and inclined toward the middle, and a second reflecting surface at the second end and inclined toward the middle, and a top portion having a third reflecting surface positioned such that the third reflecting surface reflects the ultrasonic pulses transmitted by the first transducer, and reflected by the first reflecting surface, to the second reflecting surface, and the third reflecting surface reflects the ultrasonic pulses transmitted by the second transducer and reflected by the second reflecting surface to the first reflecting surface.

In some of these embodiments, the bottom and top portions have arcuate inner walls that together define a substantially circular channel in the reflector housing. In some cases, the first end of the bottom portion of the reflector assembly has a notch, and wherein the flow tube has an inner wall with a protuberance that engages the notch when the reflector assembly is inserted in the flow tube. In some instances, the first, second, and third reflecting surfaces comprise stainless-steel. In some cases, the first and second reflecting surfaces are affixed to the bottom portion of the reflector housing via overmolding.

In certain embodiments, the invention flow meter further includes a housing in which the first and second transducers and the microcontroller are disposed, the housing having an upper surface along the perimeter thereof with a groove therein, and a cover having a protuberance along the perimeter thereof disposed in the groove, wherein the protuberance is secured in the groove with an ultraviolet-cured glue.

In certain embodiments, the first and second transducers comprise piezoceramic discs.

In some cases, the flow tube does not have a temperature measurement channel.

In some embodiments, the microcontroller causes the first and second transducers to transmit the upstream and downstream ultrasonic pulses and generates a measurement of the upstream time-of-flight and the downstream time-of-flight every 500 milliseconds.

In certain embodiments, the microcontroller calculates the ultrasound velocity based on the calculated flow rate, and in some of these cases, the microcontroller calculates the temperature of the fluid based on the calculated ultrasound velocity.

BRIEF DESCRIPTION OF THE DRAWINGS

FIG. 1A is a side view of an ultrasonic flow meter in accordance with the invention.

FIG. 1B is a top view of an ultrasonic flow meter of FIG. 1A.

FIG. 2A is a perspective view of the cover of the flow meter of FIGS. 1A-B.

FIG. 2B is a perspective view of the flow meter of FIGS. 1A-B without the cover or internal electronics.

FIG. 2C is a partially cross-sectional view of the flow meter of FIGS. 2A-B.

FIG. 3A is perspective view of a cover, antenna, and circuit board of the flow meter of FIGS. 1A-B.

FIG. 3B is a perspective view of the circuit board of FIG. 3A with batteries.

FIGS 4A is a top perspective view of a bottom circuit board of the flow meter of FIGS. 1A-B.

FIG. 4B is a bottom perspective view of the circuit board of FIG. 4A.

FIG. 5 is an exposed, perspective view of the flow meter of FIGS. 1A-B.

FIG. 6 is block diagram showing the operation of the electronics system illustrated in FIGS. 3-5.

FIGS. 7A-B are perspective views of the top and bottom portions of a reflector assembly of the flow meter of FIGS. 1A-B.

FIG. 7C is a top view of the reflector assembly of FIGS 7A-B.

FIG. 8 is an exposed, perspective view of the flow meter of FIG. 2B.

FIG. 9A is a bottom perspective side view of the bottom portion of the reflector assembly of FIGS. 7A-B.

FIG. 9B is an exposed, perspective view of the flow meter of FIG. 2B.

FIG. 10 is a partially cross-sectional view of the flow meter of FIGS. 1A-B.

FIG. 11 is a schematic diagram of the operation of the transducers and reflector assembly of the flow meter of FIGS. 1A-B.

FIG. 12 is a block diagram of the operation of the microcontroller of the flow meter of FIGS. 1A-B.

FIGS. 13A-B is a block diagram of the operation of the flow meter employing the measurement procedure of FIG. 12.

FIG. 14 is a block diagram of the calculations of FIGS. 13A-B.

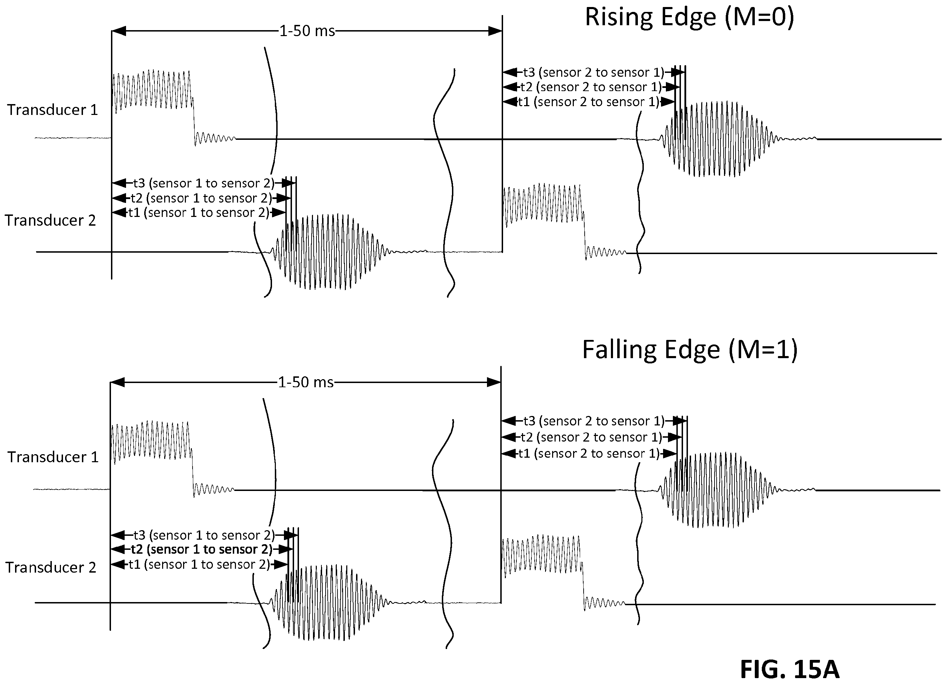

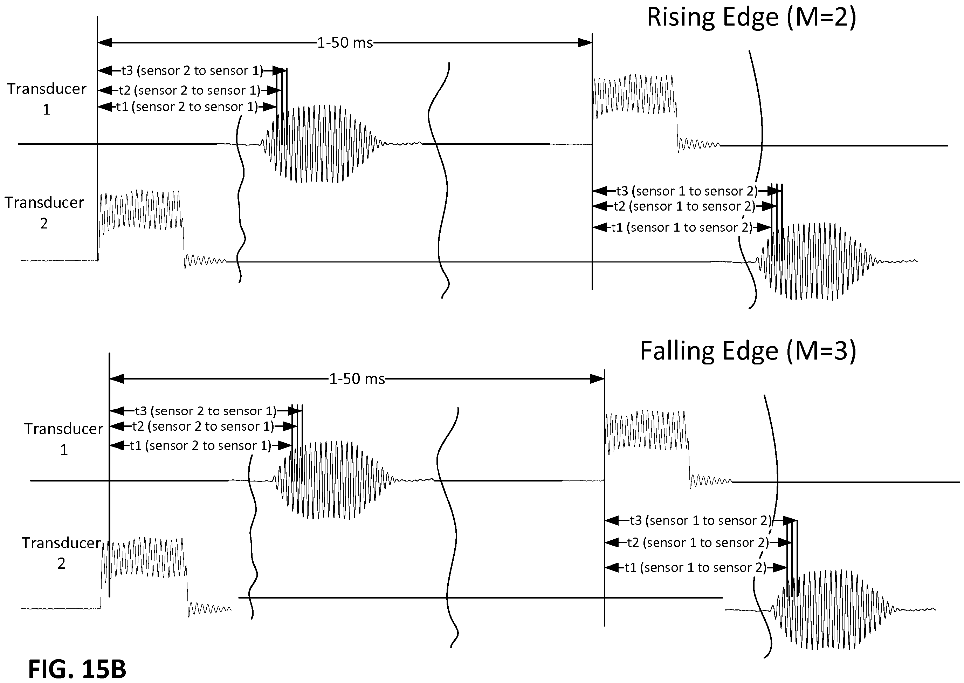

FIGS. 15A-B are diagrams showing experimental results employing the present invention.

DETAILED DESCRIPTION OF THE INVENTION

The following detailed description illustrates the technology by way of example, not by way of limitation, of the principles of the invention. This description will enable one skilled in the art to make and use the technology, and describes several embodiments, adaptations, variations, alternatives and uses of the invention, including what is presently believed to be the best mode of carrying out the invention. One skilled in the art will recognize alternative variations and arrangements, and the present technology is not limited to those embodiments described hereafter.

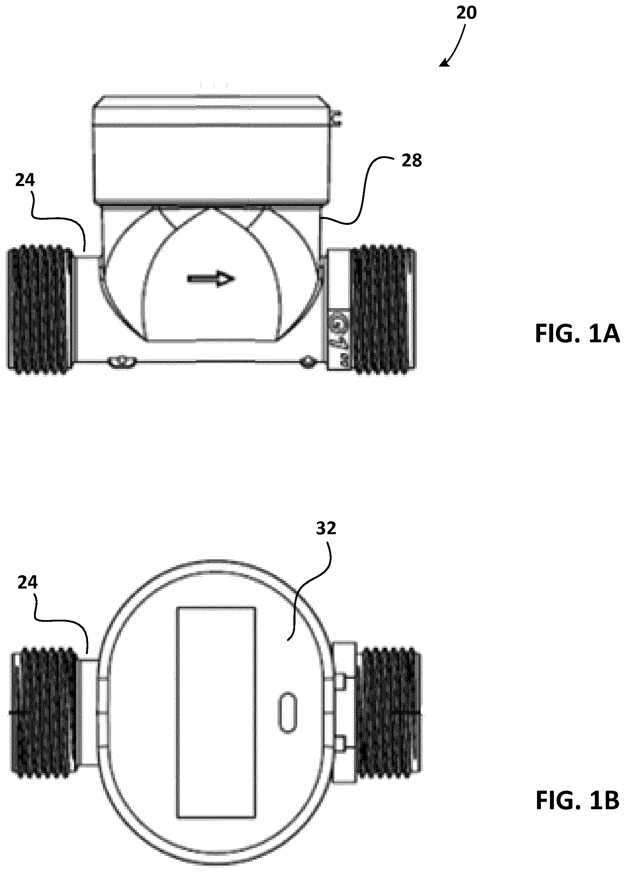

The basic components of one embodiment of an ultrasonic flow meter in accordance with the invention are illustrated in Figure 1. As used in the description, the terms "top," "bottom," "above," "below," "over," "under," "above," "beneath," "on top," "underneath," "up," "down," "upper," "lower," "front," "rear," "back," "forward" and "backward" refer to the objects referenced when in the orientation illustrated in the drawings, which orientation is not necessary for achieving the objects of the invention

FIGS. 1A-B illustrate one exemplary embodiment of a flow meter (20) in accordance with the invention. The illustrated flow meter (20) includes a flow tube (24), through which water or another liquid flow, and a housing (28) coupled thereto, which houses an electronic system for performing various measurements, as further explained below.

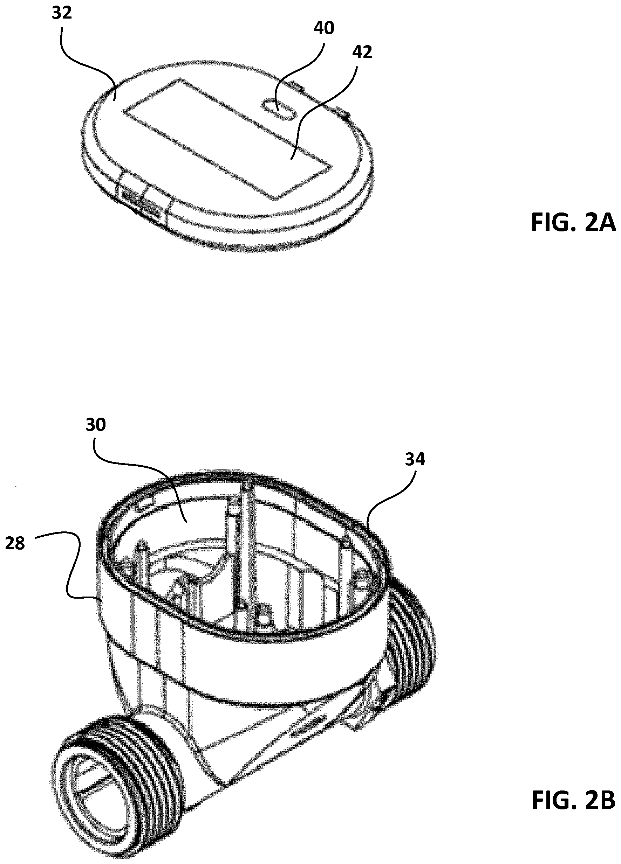

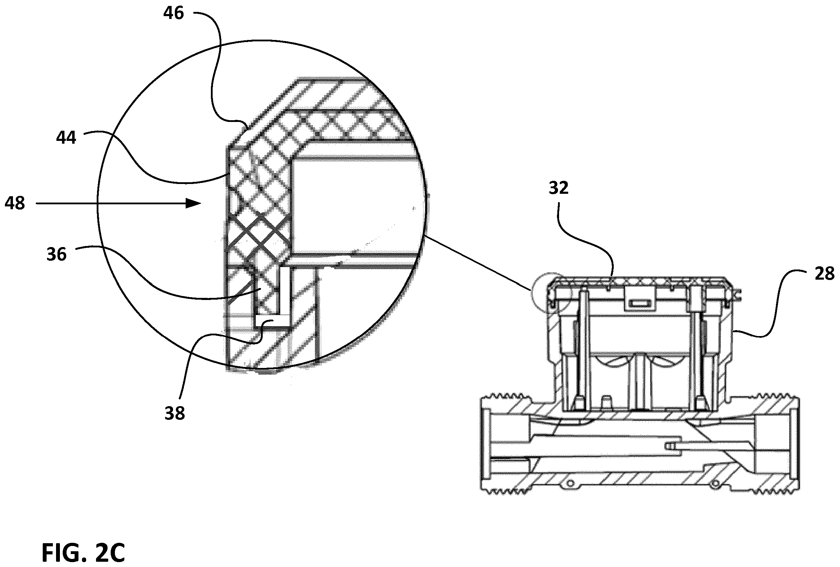

Referring to FIGS. 2A-B, the housing (28) includes a cavity (30) for accommodating the electronic systems, which is enclosed by a cover (32) in order to protect the electronic components and sensors therein from the atmosphere and surrounding water and vapor. The cover (32) has translucent areas (40) and (42), which serves as an LCD display.

As shown in FIGS. 2B-C, the top of the housing includes a groove (34) around the perimeter thereof, and the cover has a corresponding protuberance (36) that fits in the groove (34). The groove (34) includes an adhesive (38), such as glue, for securing the cover (32) to the housing (28) and ensuring that the enclosure is sealed. By securing the cover (32) with the glue, unauthorized access to the device is also prevented.

The cover (32) includes a transparent portion (44), which is covered with a colored portion (46), such that the side (48) of the cover is transparent. In view of this, the glue (38) can be cured rapidly with ultraviolet light.

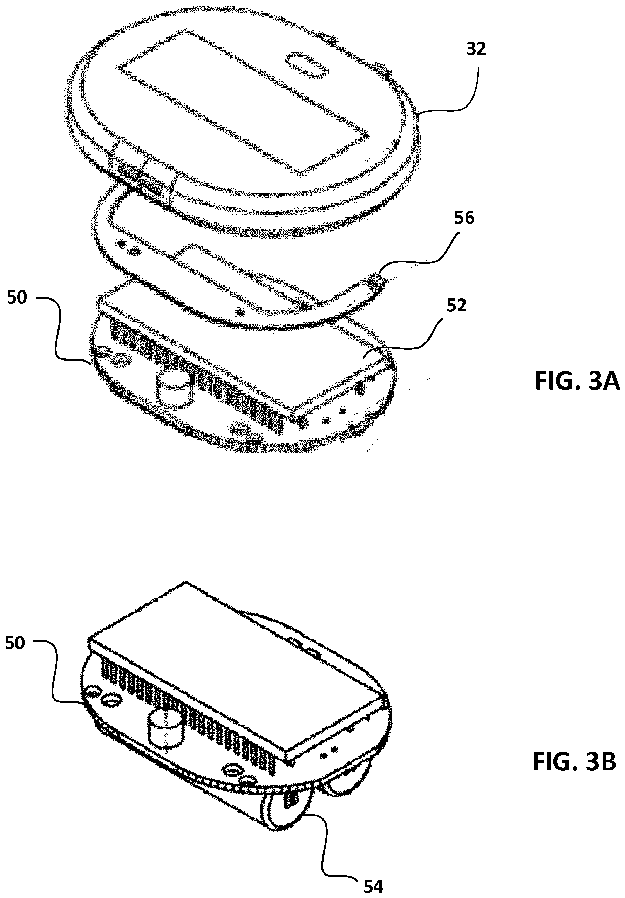

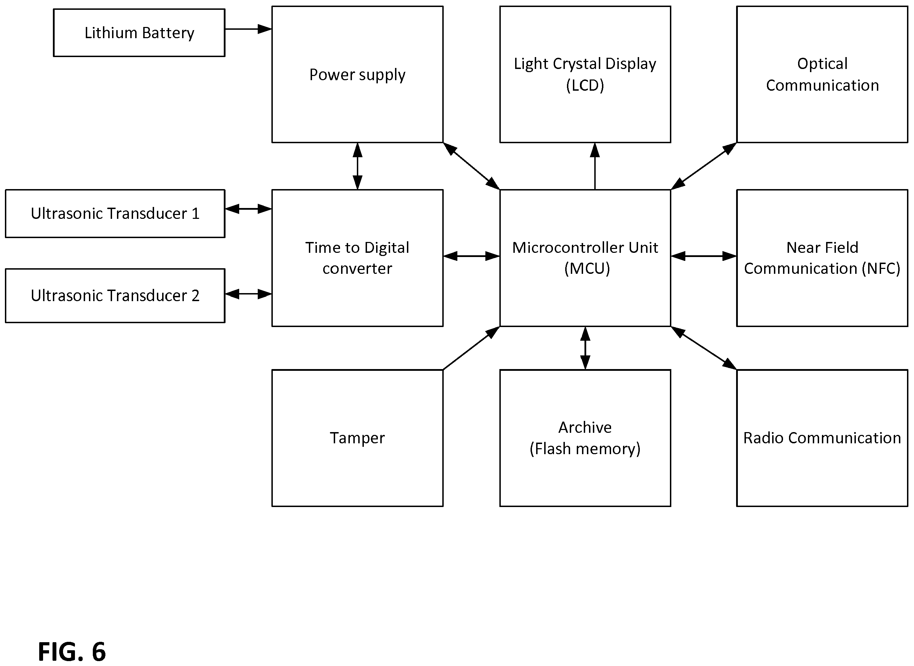

Referring to FIGS. 3-5, the basic components of the electronic system, the operations of which are shown schematically in FIG. 6, are shown. As shown in FIGS. 3A-B, a first (top) printed circuit board (50) is positioned below the cover (32). The circuit board (50) includes a microcontroller (52) for managing various functions, including near field communication, radio communication, optical communication, flash memory storage, and generation of the LCD display. Power is supplied by batteries (54), which are soldered directly to the circuit board (50) in order to avoid risking poor quality electrical contact. A radio antenna (56) made from a printed circuit board is located between the circuit board (50) and cover (32) and is connected to the board (50) via a pin connector.

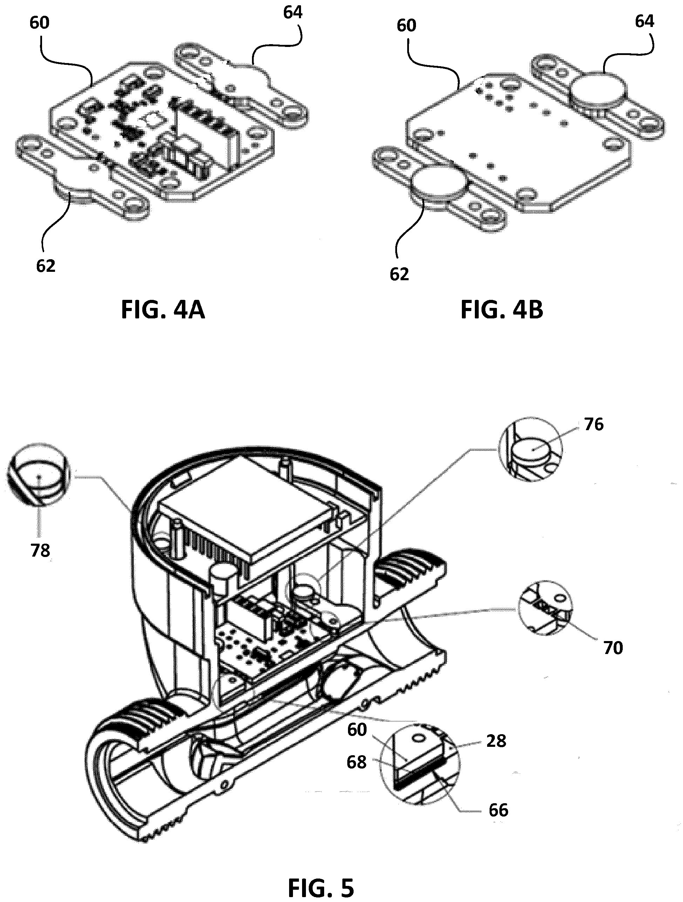

As shown in FIGS. 4A-B, a second (bottom) printed circuit board (60) for performing time-of-flight measurements is also provided. The second circuit board (60) includes first and second ultrasonic transducers (62), (64). The transducers (62), (64) can comprise piezoceramic discs, which are connected to the circuit board (60) via a flexible wire connection, as described below.

As illustrated in FIG. 5, the first and second printed circuit boards (50), (60) are disposed within the cavity (30) of the housing (28) and connected with a flexible or rigid connector. When board (60) is mounted in the housing (28), the surface (66) to which the transducers (62), (64) are soldered is cleaned via treatment with atmospheric plasma, and each bonding surface is then covered with a piezoceramic disc (68). One side of the disc (68) is connected to the circuit board (60) via a flexible joint (70), which minimizes the mechanical stress thereon resulting from the fact that the thermal expansion parameters of the printed circuit board (60) and the plastic of the housing (28) are different. The other side of the disc (68) is bonded to the wall of the flow tube (24). The thickness of the wall of the flow tube (24) where the transducers (62), (64) reside is tuned to the transducer frequency.

Each transducer (62), (64) is secured in place by melting plastic positioning pins (76). The top circuit board (50) is likewise secured in place via plastic pins (78). By securing the circuit boards to the housing (28) by melting the plastic pins in this way, the use of screws is avoided, thereby minimizing the number of parts and time required to assemble the flow meter.

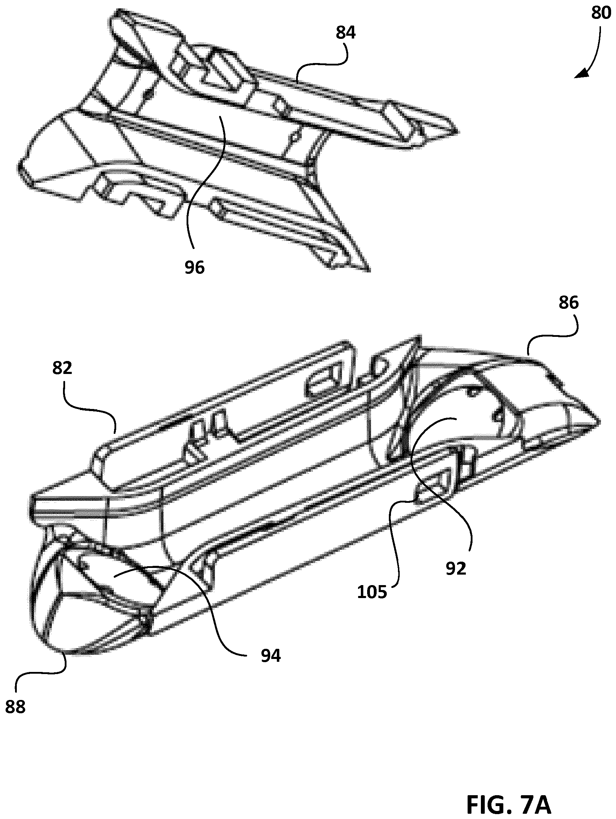

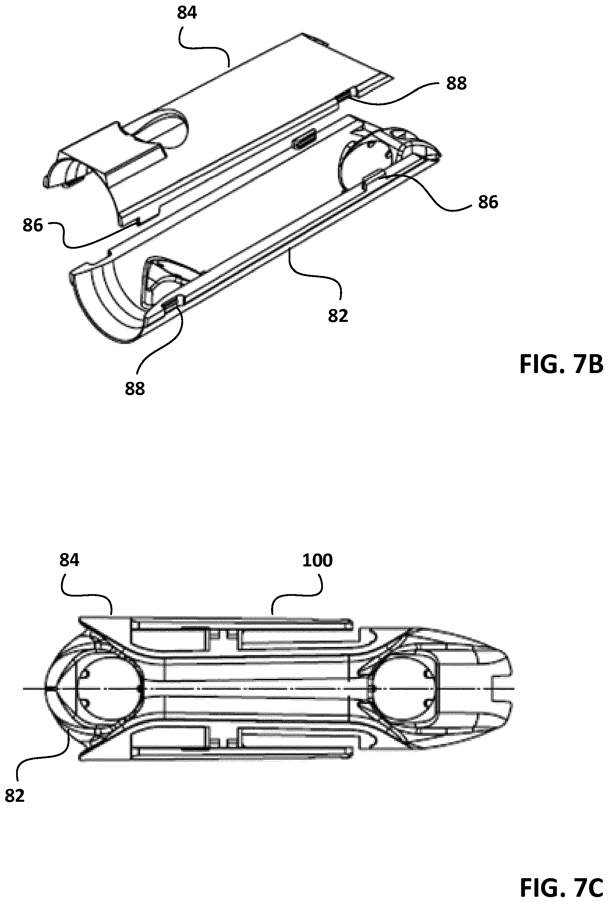

Referring to FIG. 7A, a reflector assembly (80) is shown. The assembly (80) includes a housing with a bottom portion (82) and a top portion (84), which can be made of molded plastic. The bottom portion (82) has a first end (86), a second end (88), and a middle therebetween. A reflector located at the first end (86) has a first reflecting surface (92) inclined toward the middle of the bottom portion (82), while second reflector located at the second end (88) has a second reflecting surface (94), also inclined toward the middle of the bottom portion (82). The top portion (84) includes a third reflector providing a third reflecting surface (96) for reflecting ultrasonic pulses from the first and second reflecting surfaces (92), (94), as further described below. The first, second, and third reflectors may each comprises a stainless-steel reflector affixed to the bottom and top portions (82), (84) via overmolding.

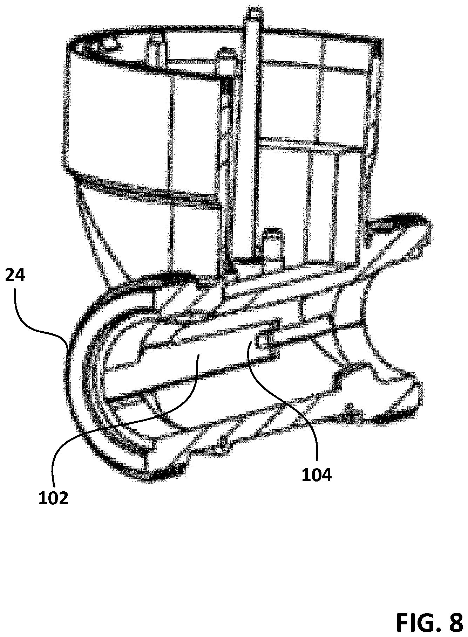

As shown in FIGS. 7B-C, the reflector assembly (80) is assembled by bringing together the top and bottom portions (82), (84) and fitting protuberances (86) on one portion into corresponding apertures (88) of the other portion. When assembled together, ribs on the bottom and top portions (82), (84) collectively provide an elongated projection (100). As shown in FIG. 8, the inner wall of the flow tube (24) includes a channel (102) for accommodating the projection (100) such that, when the reflector assembly (80) is inserted into the flow tube (24), the bottom and top portions (82), (84) are secured together. The flow tube (24) may also include a projection (104) for engaging an aperture (105) of the reflector assembly (80), as shown in FIG. 7A.

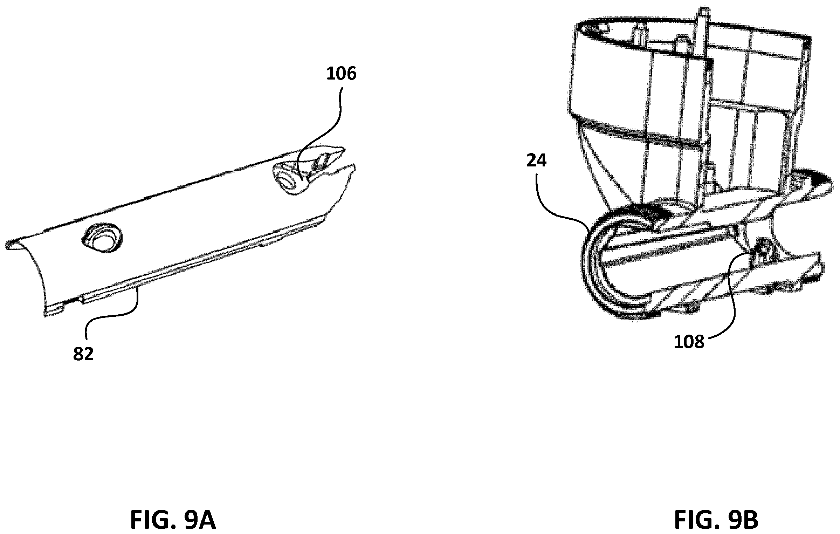

Referring to FIGS. 9A-B, in some cases, the bottom portion (82) has a notch (106) on the underside thereof, and the bottom surface of the flow tube (24) has a corresponding protuberance (108) for engaging the notch (106) and acting as a stop to prevent the reflector assembly (80) from moving in the flow tube (24) as fluid flows therethrough.

It should be noted that any number or variety of such mechanisms for interconnecting the bottom and top portions (82), (84) and the flow tube (24) may be employed.

The bottom portion (82) and the top portion (84) have arcuate inner walls such that, when assembled together, they define a substantially circular channel in the reflector housing.

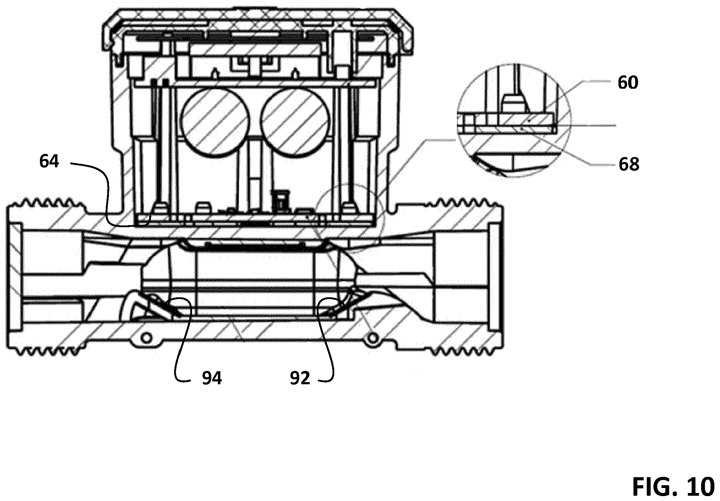

As shown in FIG. 10, when the reflector assembly (80) is disposed in the flow tube (24), the first transducer (62) is positioned above the first inclined reflecting surface (92), and the second transducer (64) is positioned above the second inclined reflecting surface (94).

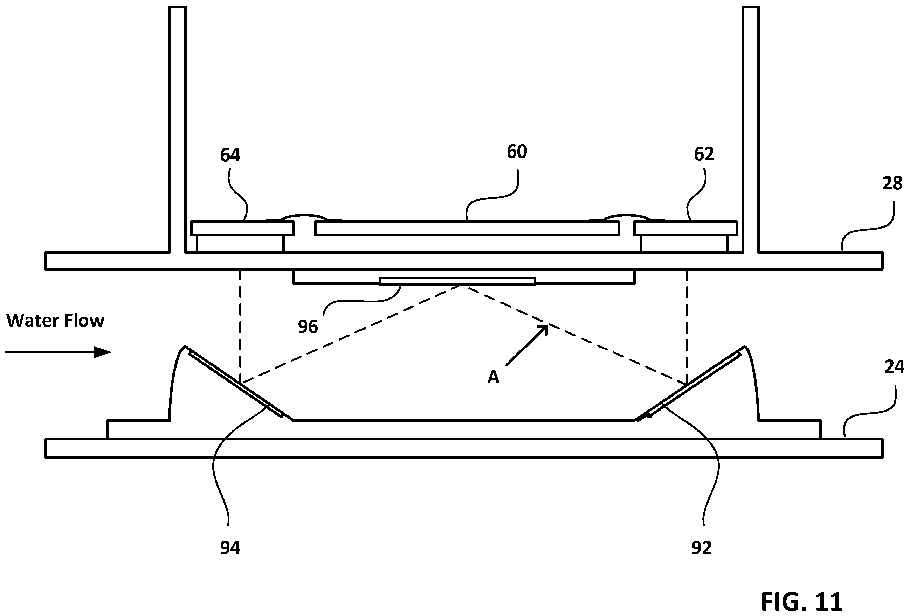

The operation of the transducers (62), (64) and reflector assembly (80) is illustrated in FIG. 11. When the first transducer (62) emits an ultrasonic pulse, it is transmitted along a path A, in which it is reflected by the first reflecting surface (92) to the third reflecting surface (96), which reflects it to the second reflecting surface (94), which reflects it to the second transducer (64). By directing the transmission of an ultrasonic pulse from the first transducer (62) in this way, and then converting the signal received at the second transducer (64) via a time-to-digital converter, the microcontroller (52) is able to make an upstream time-of-flight measurement. Similarly, when the second transducer (64) emits an ultrasonic pulse, it is transmitted along the path A in the opposite direction, in which it is reflected by the second reflecting surface (94) to the third reflecting surface (96), which reflects it to the first reflecting surface (92), which reflects it to the first transducer (62). In this way, the microcontroller (52) is able to also make a downstream time-of-flight measurement.

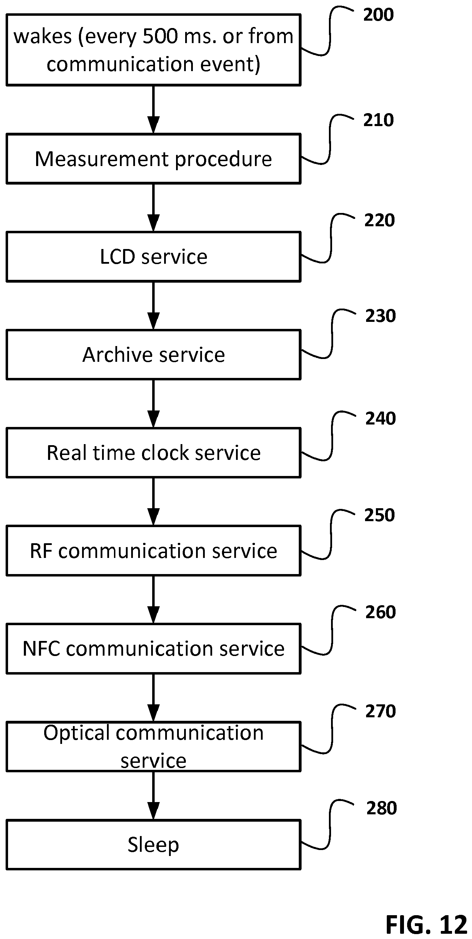

Referring to FIG. 12, the basic operations of the microcontroller (52) are shown. Each 0.5 seconds, the microcontroller "wakes up" (200). The microcontroller performs a measurement procedure (210), comprising one upstream time-of-flight and one downstream time-of-flight, as further described below. The microcontroller then services various components, which includes LDC service (220), archive service (230), real time clock service (240), radio communication service (250), near field communication service (260), and optical communication service (270). The microcontroller (52) then enters sleep mode (280) in order to minimize power consumption.

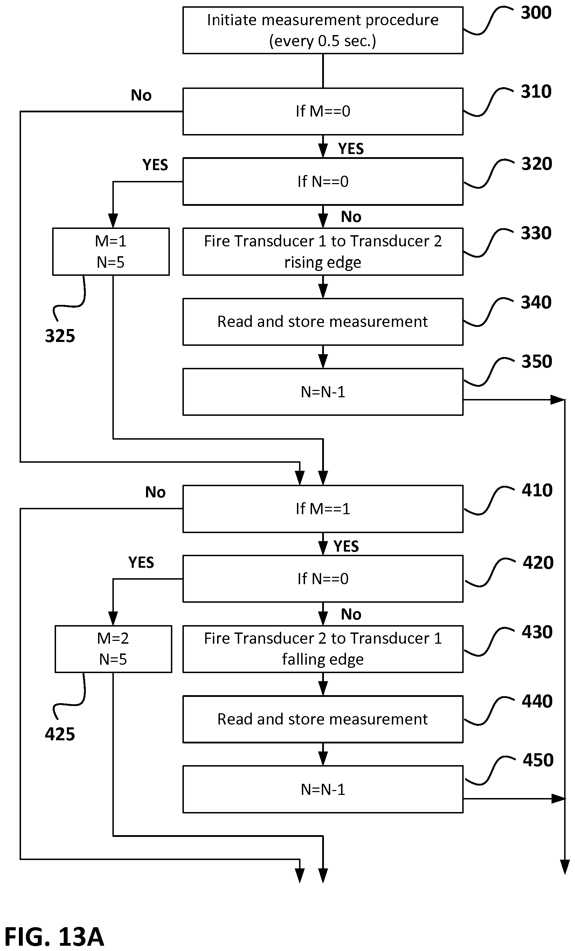

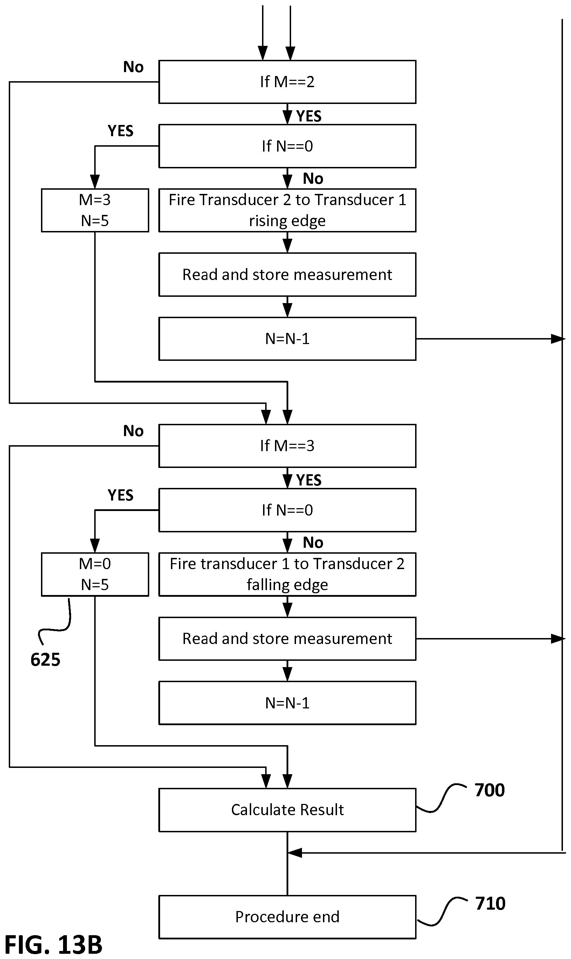

FIGS. 13A-B illustrate the manner in which the microcontroller (52) conducts each measurement procedure in one advantageous embodiment of the invention. In this embodiment, the microcontroller obtains four sequences of measurements (M0 through M3). For each sequence, the microcontroller obtains N measurements, where each measurement is one upstream time-of-flight and one downstream time-of-flight, and stores this in memory.

The measurements in a single sequence are all of the same type. The four measurement types are illustrated in the below table:

| Measurement Type | Ultrasound Transducer Pulse Order | Edge |
|---|---|---|
| 1 | 1 ->2 short pause (16-20 ms) 2->1 | rising |
| 2 | 2 ->1 short pause (16-20 ms) 1->2 | falling |
| 3 | 2 ->1 short pause (16-20 ms) 1->2 | rising |
| 4 | 1 ->2 short pause (16-20 ms) 2->1 | falling |

For each sequence, the microcontroller makes N measurements before moving on to the next sequence (which then uses a different measurement type). N is at least three, but typically, is five or seven. In the illustrated embodiment, N is five.

Every 500 milliseconds, the microcontroller wakes up and initiates the measurement procedure (300). When beginning the first sequence, M=0 and N=5. The microcontroller confirms that M is 0 (310) and confirms that N is not 0 (320). It then initiates a measurement of Type 1 (330), and reads and stores the measurement (340). It then decreases the value of $N$ by one (350), and ends the current measurement procedure (500), entering sleep mode.

When the microcontroller wakes up again (which it does every 500 ms), it again initiates the measurement procedure. It repeats the same steps, again decreasing the value of $N$ by one (350). In the illustrated example, N is five. Therefore, after the microcontroller has completed the measurement procedure five times, when it checks if N is 0 (320), the answer will be 'yes,' and the microcontroller will change the sequence M to 1 and reset $N$ to 5 (325), and then begin the next sequence (M1).

After checking the values of M and N (410, 420), the microcontroller initiates a measurement of Type 2 (430). The microcontroller reads and stores the measurement (440). It then decreases the value of $N$ by one (450), and ends the current measurement procedure (500), entering sleep mode. As with the prior sequence, the microcontroller repeats these steps each time it wakes until the value of N is 0, at which point, it again resets the values of M and N (425) and moves on to the next sequence (M2).

The microcontroller repeats the same steps using measurements of Type 3 until it moves onto the final sequence (M3). After it completes the final sequence using measurements of Type 4, it resets the value of M to 0 (625) so that the system is ready to repeat the above, and then calculates the result (700).

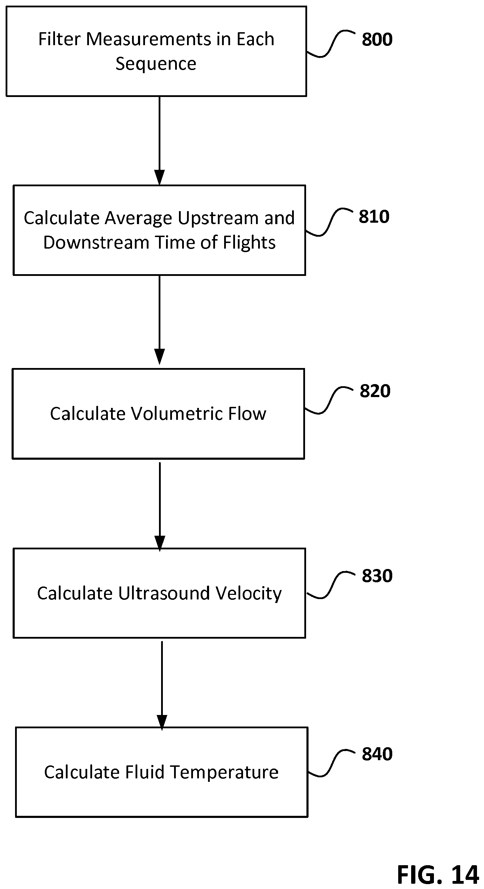

Referring to FIG. 14, the microcontroller first filters (800) the results of each of the sequences. The microcontroller does this by removing the longest time-of-flight and the shortest time-of-flight from the upstream time-of-flights in that sequence, and similarly, removing the longest time-of-flight and the shortest time-of-flight from the downstream time-of-flights in the sequence. For example, in certain cases, each sequence will include five measurements (both upstream and downstream). In those cases, the filtering will typically (though not necessarily) comprise removing just the longest time-of-flight and the shortest time-of-flight. As another example, in some cases, each sequence will include seven measurements. In those cases, the filtering will typically (though not necessarily) comprise removing the two longest and the two shortest time-of-flights.

After filtering the four sequences in this way, the microcontroller (52) calculates (810) the average upstream time-of-flight from the remaining upstream time-of-flights and calculates the average downstream time-of-flight from the remaining downstream time-of-flights. The microcontroller then calculates (820) the volumetric flow in two steps.

First, the microcontroller calculates $flow_{RAW}$ in accordance with the following relationship:

$$flow_{RAW} = Q_f \times \frac{TimeUp - TimeDown}{TimeUp \times TimeDown}$$

Where:

$Q_f$ is a multiplier based on the flow channel dimensions, time measurement units, etc., which is identified by the specific ultrasonic flowmeter's calibration procedure using a comparison of the flow meter's reading with a gold standard flow meter reading for the same nominal flow, and is used to correct for systematic error (bias) of a specific flow meter family as shown in the examples below;

*TimeUp* is the upstream time-of-flight (measured in picoseconds); and

*TimeDown* is the downstream time-of-flight (measured in picoseconds). The values of *TimeUp* and *TimeDown* may vary anywhere from 30 microseconds to 200 microseconds for different flow meter geometries.

The microcontroller then calculates the real volumetric flow (*flow*) by correcting flow$_{RAW}$ with a calibration function $Q_{xc}(flow_{RAW})$ in accordance with the following relationship:

$$flow = flow_{RAW} \times Q_{xc}(flow_{RAW})$$

where $Q_{xc}(flow_{RAW})$ is simply a calibration function identified during calibration of the flow meter using a gold standard flow meter. It should be understood that such correction coefficients are determined from $Q_x(flow)$, where $Q_x$ is empirical and is identified using the same procedure as for the identification of $Q_f$, but using different flows from minimal to maximal (not just nominal flow) in order to identify the function $Q_x(flow)$. Values of $Q_{xc}(flow_{RAW})$ are stored in the flow meter's memory and can vary anywhere from 0.1 to 2.0.

Two practical examples of real *flow* calculations are shown below.

Example 1 - high flow measurement (real flow = 4.0 m$^3$/h)

*TimeUp* = 40587900 ps

*TimeDown* = 40000000 ps

$Q_f$ = 11047724520

$$\text{flow}_{RAW} = 11047724520 \times \frac{40587900 - 40000000}{40587900 \times 40000000} = 4.0005 \; {m^3}/{h}$$

$Q_{xc}(4.0005) = 0.9999$

$$flow = 4.0005 * 0.9999 = 4.00009 \, {m^3}/{h}$$

The absolute error of the flow measurement is 4.00009 - 4.0 = $9 \times 10^{-5}$ *m$^3$/h*

Example 2 - low flow measurement (real flow = 0.00969 m$^3$/h) *TimeUp* = 40294900 ps

*TimeDown* = 40293000 ps
$Q_f$ = 11047724520

$$\text{flow}_{RAW} = 11047724520 \times \frac{40294900 - 40293000}{40294900 \times 40293000} = 0.01292 \, {m^3}/{h}$$

$Q_{xc}(0.01292) = 0.75$

$$flow = 0.01292 * 0.75 = 0.00969 \, {}^{m^3}\!/_h$$

The absolute error of the flow measurement is 0.00969 - 0.00969 = 0 $m^3/h$

In some cases, the microcontroller (52) calculates (830) the ultrasound velocity based on the calculated flow rate, and then calculates (840) the temperature of the fluid based on the calculated ultrasound velocity. In view of this, in certain advantageous embodiments, the flow tube (24) does not have a temperature measurement channel since the temperature can be calculated indirectly from the time-of-flight measurements, thereby saving space and reducing the number of components.

Although the invention has been described with reference to embodiments herein, those embodiments do not limit the scope of the invention. Accordingly, reference should be made primarily to the accompanying claims, rather than the foregoing specification, to determine the scope of the invention.

**Claims**

1.  An ultrasonic flow meter (20) for measuring the flow of a fluid, comprising:

    a flow tube (24) through which a fluid to be measured flows;
    a first transducer (62) positioned to transmit an ultrasonic pulse through the fluid flowing through the flow tube;
    a second transducer (64) positioned to transmit another ultrasonic pulse through the fluid flowing through the flow tube;
    a microcontroller (52) in communication with the first and second transducers such that the microcontroller causes the first and second transducers to transmit the upstream and downstream ultrasonic pulses and generates a measurement of the upstream time-of-flight and the downstream time-of-flight;
    wherein the microcontroller obtains a plurality of sequences (M0 through M3) of said measurement, each sequence comprising at least three measurements of the upstream and downstream time-of-flights, the at least three measurements being of the same measurement type selected from the group of:

    (a) the time between consecutive rising edges of a pulse emitted from the first transducer and reflected by the reflector assembly to the second transducer, and the time between consecutive rising edges of a subsequent pulse emitted from the second transducer and reflected by the reflector assembly to the first transducer,
    (b) the time between consecutive falling edges of a pulse emitted from the second transducer and reflected by the reflector assembly to the first transducer, and the time between consecutive falling edges of a subsequent pulse emitted from the first transducer and reflected by the reflector assembly to the second transducer,
    (c) the time between consecutive rising edges of a pulse emitted from the second transducer and reflected by the reflector assembly to the first transducer, and the time between consecutive rising edges of a subsequent pulse emitted from the first transducer and reflected by the reflector assembly to the second transducer, and
    (d) the time between consecutive falling edges of a pulse emitted from the first transducer and reflected by the reflector assembly to the second transducer, and the time between consecutive falling edges of a subsequent pulse emitted from the second transducer and reflected by the reflector assembly to the first transducer,

    wherein each of said sequences has time-of-flight measurements of a different type than the time-of-flight measurements of the other said sequences; and
    **characterised in that**, a reflector assembly (80) is disposed in the flow tube, the reflector assembly being configured to reflect the ultrasonic pulse transmitted by the first transducer to the second transducer to provide an upstream pulse having an upstream time time-of-flight, and to reflect the ultrasonic pulse transmitted by the second transducer to the first transducer to provide a downstream pulse having a downstream time-of-flight;
    for each of the plurality of sequences, the microcontroller filters said sequence by removing the longest time-of-flight and the shortest time-of-flight from the upstream times-of-flight in said sequence, and removing the longest time-of-flight and the shortest time-of-flight from the downstream times-of-flight in said sequence; and
    wherein the microcontroller calculates the average upstream time-of-flight from the remaining upstream times-of-flight in the plurality of sequences, and calculates the average downstream time-of-flight from the remaining downstream times-of-flight in the plurality of sequences, after filtering said plurality of sequences; and wherein the microcontroller calculates the volumetric flow rate based on the average upstream time-of-flight and the average downstream time-of-flight.

2. The ultrasonic flow meter of claim 1, wherein the microcontroller obtains a sequence employing measurement type (a), a sequence employing measurement type (b), a sequence employing measurement type (c), and a sequence employing measurement type (d).

3. The ultrasonic flow meter of claim 1 or 2, wherein each sequence obtained by the microcontroller comprises five measurements of the upstream and downstream times-of-flight.

4. The ultrasonic flow meter of claim 1 or 2, wherein each sequence obtained by the microcontroller comprises seven measurements of the upstream and downstream times-of-flight, and wherein, for each of the plurality of sequences, the microcontroller further removes the second longest time-of-flight and the second shortest time-of-flight from the upstream times-of-flight in said sequence, and further removes the second longest time-of-flight and the second shortest time-of-flight from the downstream times-of-flight in said sequence.

5. The ultrasonic flow meter of claim 1, wherein the reflector assembly includes a reflector housing disposable in the flow tube, the reflector housing comprising:

a bottom portion having a middle, first and second ends, a first reflecting surface at the first end and inclined toward the middle, and a second reflecting surface at the second end and inclined toward the middle; and
a top portion having a third reflecting surface positioned such that the third reflecting surface reflects the ultrasonic pulses transmitted by the first transducer, and reflected by the first reflecting surface, to the second reflecting surface, and the third reflecting surface reflects the ultrasonic pulses transmitted by the second transducer and reflected by the second reflecting surface to the first reflecting surface.

6. The ultrasonic flow meter of claim 5, wherein the bottom and top portions have arcuate inner walls that together define a substantially circular channel in the reflector housing.

7. The ultrasonic flow meter of claim 5, wherein the first end of the bottom portion of the reflector assembly has a notch, and wherein the flow tube has an inner wall with a protuberance that engages the notch when the reflector assembly is inserted in the flow tube.

8. The ultrasonic flow meter of claim 5, wherein the first, second, and third reflecting surfaces comprise stainless-steel.

9. The ultrasonic flow meter of claim 5, wherein the first and second reflecting surfaces are affixed to the bottom portion of the reflector housing via overmolding.

10. The ultrasonic flow meter of claim 1, further comprising:

a housing in which the first and second transducers and the microcontroller are disposed, the housing having an upper surface along the perimeter thereof with a groove therein; and
a cover having a protuberance along the perimeter thereof disposed in the groove;
wherein the protuberance is secured in the groove with an ultraviolet-cured glue.

11. The ultrasonic flow meter of claim 1, wherein the first and second transducers comprise piezoceramic discs.

12. The ultrasonic flow meter of claim 1, wherein the flow tube does not have a temperature measurement channel.

13. The ultrasonic flow meter of claim 1, wherein the microcontroller causes the first and second transducers to transmit the upstream and downstream ultrasonic pulses and generates a measurement of the upstream time-of-flight and the downstream time-of-flight every 500 milliseconds.

14. The ultrasonic flow meter of claim 1, wherein the microcontroller calculates the ultrasound velocity based on the calculated flow rate.

15. The ultrasonic flow meter of claim 14, wherein the microcontroller calculates the temperature of the fluid based on the calculated ultrasound velocity.

**Patentansprüche**

1.  Ein Ultraschallflussmesser (20) zur Messung des Durchflusses einer Flüssigkeit, der umfasst:

    ein Durchflussrohr (24), durch das die zu messende Flüssigkeit fließt;
    ein erster Wandler (62), so positioniert, dass er einen Ultraschallimpuls durch die durch das Durchflussrohr fließende Flüssigkeit überträgt;
    einen zweiten Wandler (64), so positioniert, dass er einen weiteren Ultraschallimpuls durch die durch das Durchflussrohr fließende Flüssigkeit überträgt;
    einen Mikrocontroller (52), der in Verbindung mit dem ersten und zweiten Wandler steht, so dass der Mikrocontroller den ersten und zweiten Wandler dazu veranlasst, die Aufwärts- und Abwärts- Ultraschallimpulse zu übertragen und eine Messung der Aufwärts- Laufzeit und der Abwärts- Laufzeit durchzuführen;
    wobei der Mikrocontroller eine Vielzahl von Sequenzen (MO durch M3) |dieser Messung erhält, wobei jede Sequenz mindestens drei Messungen der Aufwärts- und Abwärts- Laufzeiten enthält, bei den mindestens drei Messungen handelt es sich um denselben Messtyp, ausgewählt aus der Gruppe:

    (a) der Zeit zwischen aufeinanderfolgenden steigenden Flanken eines vom ersten Wandler gesendeten Impulses und reflektiert von der Reflektoranordnung an den zweiten Wandler, und der Zeit zwischen aufeinanderfolgenden steigenden Flanken eines folgenden Impulses, gesendet vom zweiten Wandler und reflektiert von der Reflektoranordnung an den ersten Wandler,
    (b) der Zeit zwischen aufeinanderfolgenden fallenden Flanken eines vom zweiten Wandler gesendeten und von der Reflektoranordnung an den ersten Wandler reflektierten Impulses, und der Zeit zwischen aufeinanderfolgenden fallenden Flanken eines folgenden Impulses, gesendet vom ersten Wandler und reflektiert von der Reflektoranordnung an den zweiten Wandler,
    (c) der Zeit zwischen aufeinanderfolgenden steigenden Flanken eines vom zweiten Wandler gesendeten Impulses, reflektiert von der Reflektoranordnung an den ersten Wandler, und der Zeit zwischen aufeinanderfolgenden steigenden Flanken eines folgenden Impulses, gesendet vom ersten Wandler und reflektiert von der Reflektoranordnung an den ersten Wandler,
    (d) der Zeit zwischen aufeinanderfolgenden fallenden Flanken eines vom ersten Wandler gesendeten Impulses, reflektiert von der Reflektoranordnung an den zweiten Wandler, und der Zeit zwischen aufeinanderfolgenden fallenden Flanken eines folgenden Impulses, reflektiert vom zweiten Wandler und reflektiert von der Reflektoranordnung an den ersten Wandler,

    wobei sich der Typ der Laufzeitmessung jeder dieser Sequenzen vom Typ der Laufzeitmessungen der erwähnten anderen Sequenzen unterscheidet; und
    **dadurch gekennzeichnet, dass** eine Reflektoranordnung (80) im Durchflussrohr angeordnet ist, die Reflektoranordnung ist dabei dazu konfiguriert, den Ultraschallimpuls zu reflektieren, der vom ersten Wandler an den zweiten Wandler übertragen wird, um einen Aufwärtsimpuls mit einer Aufwärts- Laufzeit zu erzeugen und den Ultraschallimpuls zu reflektieren, der vom zweiten Wandler an den ersten Wandler übertragen wird um einen Abwärtsimpuls mit einer Abwärts Laufzeit zu erzeugen;
    für jede der verschiedenen Sequenzen filtert der Mikrocrocontroller diese Sequenz heraus, indem die längste Laufzeit und die kürzeste Laufzeit aus der Aufwärts-Laufzeit in dieser Sequenz entfernt werden und die längste Laufzeit und die kürzeste Laufzeit aus der Abwärts- Laufzeit in dieser Sequenz entfernt werden, und
    wobei der Mikrocontroller die durchschnittliche Aufwärts- Laufzeit aus der verbleibenden Aufwärts-. Laufzeit in den verschiedenen Sequenzen berechnet,
    und die durchschnittliche Abwärts- Laufzeit aus der verbleibenden Abwärts-Laufzeit in den verschiedenen Sequenzen berechnet, nach Filtern der erwähnten verschiedenen Sequenzen; und
    wobei der Mikrocontroller den Volumenstrom auf Grundlage der durchschnittlichen Aufwärts- Laufzeit und der durchschnittlichen Abwärts- Laufzeit berechnet.

2.  Der Ultraschallflussmesser nach Anspruch 1, wobei der Mikrocontroller eine Sequenz erhält, die den Messtyp (a) verwendet, eine Sequenz, die den Messtyp (b)verwendet, eine Sequenz, die den Messtyp (c) verwendet, und eine Sequenz, die den Messtyp (d) verwendet.

3.  Der Ultraschallflussmesser nach Anspruch 1 oder 2, wobei jede vom Mikrocontroller erhaltene Sequenz fünf Messungen der Aufwärts- und Abwärts-Laufzeit umfasst.

4. Der Ultraschallflussmesser nach Anspruch 1 oder 2, wobei jede vom Mikrocontroller erhaltene Sequenz sieben Messungen der Aufwärts- und Abwärts-Laufzeit, enthält und wobei für jede der Vielzahl von Sequenzen der Mikrocontroller außerdem die zweitlängste Laufzeit und die zweitkürzeste Laufzeit aus der Aufwärts- Laufzeit in dieser Sequenz entfernt und außerdem die zweitlängste Laufzeit und die zweitkürzeste Laufzeit aus der Aufwärts- Laufzeit in dieser Sequenz entfernt.

5. Der Ultraschallflussmesser nach Anspruch 1, wobei die Reflektoranordnung ein Reflektorgehäuse umfasst, das im Durchflussrohr untergebracht werden kann, wobei dieses Reflektorgehäuse enthält:

ein Bodenabschnitt, mit einem mittleren, ersten und zweiten Endstück, eine erste reflektierende Fäche am ersten Endstück und zur Mitte hin geneigt, und eine zweite reflektierende Fäche am zweiten Endstück und zur Mitte hin geneigt, und

ein oberer Abschnitt mit einer dritten reflektierenden Fläche, so angeordnet, dass die dritte reflektierende Fläche den vom ersten Wandler übertragenen und von der ersten reflektierenden Fläche reflektierten Ultraschallimpuls an die zweite reflektierende Fläche reflektiert, und die dritte reflektierende Fläche den vom zweiten Wandler übertragenen und von der zweiten reflektierenden Fläche reflektierten Ultraschallimpuls reflektiert.

6. Der Ultraschallflussmesser nach Anspruch 5, wobei die unteren und oberen Abschnitte bogenförmige Innenwände haben, die zusammen einen im Wesentlichen ringförmigen Kanal im Reflektorgehäuse definieren.

7. Der Ultraschallflussmesser nach Anspruch 5, wobei das erste Ende des unteren Abschnitts der Reflektoranordnung eine Kerbe aufweist, und wobei das Durchflussrohr eine Innenwand mit einer Ausstülpung aufweist, die in die Kerbe greift, wenn die Reflektoranordnung in das Durchflussrohr eingesetzt wird.

8. Der Ultraschallflussmesser nach Anspruch 5, wobei die erste, zweite und dritte reflektierende Fläche Edelstahl enthält.

9. Der Ultraschallflussmesser nach Anspruch 5, wobei die erste und zweite reflektierende Fläche am unteren Abschnitt des Reflektorgehäuses durch Umspritzen befestigt sind.

10. Der Ultraschallflussmesser nach Anspruch 1, weiterhin umfassend:

ein Gehäuse, in dem der erste und zweite Wandler und der Mikrocontroller angeordnet sind, wobei das Gehäuse eine obere Fläche enthält, mit einer darin enthaltenen, über den Umfang verlaufenden Nut; und

einen Deckel, mit einer Ausstülpung über den Umfang, angeordnet in der Nut, wobei die Ausstülpung in der Nut mit einem UV-Aushärtungsklebstoff gesichert ist.

11. Der Ultraschallflussmesser nach Anspruch 1, wobei die ersten und zweiten Wandler piezokeramische Scheiben enthalten.

12. Der Ultraschallflussmesser nach Anspruch 1, wobei das Durchflussrohr keinen Temperaturmesskanal enthält.

13. Der Ultraschallflussmesser nach Anspruch 1, wobei der Mikrocontroller den ersten und zweiten Wandler dazu veranlasst, die Aufwärts- und Abwärts-Ultraschallimpulse zu übertragen und alle 500 Millisekunden eine Messung der Aufwärts- Laufzeit und der Abwärts- Laufzeit durchzuführen.

14. Der Ultraschallflussmesser nach Anspruch 1, wobei der Mikrocontroller die Ultraschallgeschwindigkeit auf Basis der berechneten Durchflussrate berechnet.

15. Der Ultraschallflussmesser nach Anspruch 14, wobei der Mikrocontroller die Temperatur der Flüssigkeit auf Basis der berechneten Durchflussrate berechnet.

**Revendications**

1. Débitmètre à ultrasons (20) pour mesurer l'écoulement d'un fluide, comprenant :

un tube d'écoulement (24) à travers lequel s'écoule un fluide à mesurer ;

un premier transducteur (62) positionné pour transmettre une impulsion ultrasonique à travers le fluide s'écoulant à travers le tube d'écoulement ;

un second transducteur (64) positionné pour transmettre une autre impulsion ultrasonique à travers le fluide s'écoulant à travers le tube d'écoulement ;

un microcontrôleur (52) en communication avec les premier et second transducteurs de telle sorte que le microcontrôleur amène les premier et second transducteurs à transmettre les impulsions ultrasoniques amont et aval et génère une mesure du temps de vol amont et du temps de vol aval ;

dans lequel le microcontrôleur obtient une pluralité de séquences (MO à M3) de ladite mesure, chaque séquence comprenant au moins trois mesures des temps de vol amont et aval, les au moins trois mesures étant du même type de mesure sélectionné dans le groupe comprenant :

(a) le temps entre des fronts ascendants consécutifs d'une impulsion émise par le premier transducteur et réfléchie par l'ensemble réflecteur vers le second transducteur, et le temps entre des fronts ascendants consécutifs d'une impulsion suivante émise par le second transducteur et réfléchie par l'ensemble réflecteur vers le premier transducteur,

(b) le temps entre des fronts descendants consécutifs d'une impulsion émise par le second transducteur et réfléchie par l'ensemble réflecteur vers le premier transducteur, et le temps entre des fronts descendants consécutifs d'une impulsion suivante émise par le premier transducteur et réfléchie par l'ensemble réflecteur vers le second transducteur,

(c) le temps entre des fronts ascendants consécutifs d'une impulsion émise par le second transducteur et réfléchie par l'ensemble réflecteur vers le premier transducteur, et le temps entre des fronts ascendants consécutifs d'une impulsion suivante émise par le premier transducteur et réfléchie par l'ensemble réflecteur vers le second transducteur, et

(b) le temps entre des fronts descendants consécutifs d'une impulsion émise par le premier transducteur et réfléchie par l'ensemble réflecteur vers le premier transducteur, et le temps entre des fronts descendants consécutifs d'une impulsion suivante émise par le premier transducteur et réfléchie par l'ensemble réflecteur vers le premier transducteur,

dans lequel chacune desdites séquences présente des mesures de temps de vol d'un type différent des mesures de temps de vol des autres dites séquences ; et **caractérisé en ce qu'**un ensemble réflecteur (80) est disposé dans le tube d'écoulement, l'ensemble réflecteur étant configuré pour réfléchir l'impulsion ultrasonique transmise par le premier transducteur au second transducteur pour fournir une impulsion amont présentant un temps de vol amont, et pour réfléchir l'impulsion ultrasonique transmise par le second transducteur au premier transducteur pour fournir une impulsion aval présentant un temps de vol aval ; pour chacune de la pluralité de séquences, le microcontrôleur filtre ladite séquence en retirant le temps de vol le plus long et le temps de vol le plus court des temps de vol amont dans ladite séquence, et en retirant le temps de vol le plus long et le temps de vol le plus court des temps de vol aval dans ladite séquence ; et

dans lequel le microcontrôleur calcule le temps de vol amont moyen à partir des temps de vol amont restants dans la pluralité de séquences, et calcule le temps de vol aval moyen à partir des temps de vol aval restants dans la pluralité de séquences, après filtrage de ladite pluralité de séquences ; et

dans lequel le microcontrôleur calcule le débit d'écoulement volumétrique sur la base du temps de vol amont moyen et du temps de vol aval moyen.

2. Débitmètre à ultrasons selon la revendication 1, dans lequel le microcontrôleur obtient une séquence employant le type de mesure (a), une séquence employant le type de mesure (b), une séquence employant le type de mesure (c) et une séquence employant le type de mesure (d).

3. Débitmètre à ultrasons selon la revendication 1 ou 2, dans lequel chaque séquence obtenue par le microcontrôleur comprend cinq mesures des temps de vol amont et aval.

4. Débitmètre à ultrasons selon la revendication 1 ou 2, dans lequel chaque séquence obtenue par le microcontrôleur comprend sept mesures des temps de vol amont et aval, et dans lequel, pour chacune de la pluralité de séquences, le microcontrôleur retire en outre le second temps de vol le plus long et le second temps de vol le plus court du temps de vol amont dans ladite séquence, et retire en outre le second temps de vol le plus long et le second temps de vol le plus court des temps de vol aval dans ladite séquence.

5. Débitmètre à ultrasons selon la revendication 1, dans lequel l'ensemble réflecteur inclut un logement de réflecteur pouvant être disposé dans le tube d'écoulement, le logement de réflecteur comprenant :

une partie inférieure présentant un milieu, des première et seconde extrémités, une première surface réfléchissante au niveau de la première extrémité et inclinée vers le milieu, et une deuxième surface réfléchissante au niveau de la seconde extrémité et inclinée vers le milieu ; et
une partie supérieure présentant une troisième surface réfléchissante positionnée de telle sorte que la troisième surface réfléchissante réfléchit les impulsions ultrasoniques transmises par le premier transducteur, et réfléchies par la première surface réfléchissante, vers la deuxième surface réfléchissante, et la troisième surface réfléchissante réfléchit les impulsions ultrasoniques transmises par le second transducteur et réfléchies par la deuxième surface réfléchissante vers la première surface réfléchissante.

6. Débitmètre à ultrasons selon la revendication 5, dans lequel les parties inférieure et supérieure présentent des parois internes arquées qui définissent ensemble un canal sensiblement circulaire dans le logement de réflecteur.

7. Débitmètre à ultrasons selon la revendication 5, dans lequel la première extrémité de la partie inférieure de l'ensemble réflecteur comporte une encoche, et dans lequel le tube d'écoulement présente une paroi interne avec une protubérance qui vient en prise avec l'encoche lorsque l'ensemble réflecteur est inséré dans le tube d'écoulement.

8. Débitmètre à ultrasons selon la revendication 5, dans lequel les première, deuxième et troisième surfaces réfléchissantes comprennent de l'acier inoxydable.

9. Débitmètre à ultrasons selon la revendication 5, dans lequel les première et deuxième surfaces réfléchissantes sont fixées à la partie inférieure du logement de réflecteur via un surmoulage.

10. Débitmètre à ultrasons selon la revendication 1, comprenant en outre :

un logement dans lequel les premier et second transducteurs et le microcontrôleur sont disposés, le boîtier présentant une surface supérieure le long du périmètre de celui-ci avec une rainure en son sein ; et
un couvercle présentant une protubérance le long du périmètre de celui-ci disposé dans la rainure ;
dans lequel la protubérance est fixée dans la rainure à l'aide d'une colle durcie aux ultraviolets.

11. Débitmètre à ultrasons selon la revendication 1, dans lequel les premier et second transducteurs comprennent des disques piézocéramiques.

12. Débitmètre à ultrasons selon la revendication 1, dans lequel le tube d'écoulement ne présente pas de canal de mesure de température.

13. Débitmètre à ultrasons selon la revendication 1, dans lequel le microcontrôleur amène les premier et second transducteurs à transmettre les impulsions ultrasoniques amont et aval et génère une mesure du temps de vol amont et du temps de vol aval toutes les 500 millisecondes.

14. Débitmètre à ultrasons selon la revendication 1, dans lequel le microcontrôleur calcule la vitesse d'ultrasons sur la base du débit d'écoulement calculé.

15. Débitmètre à ultrasons selon la revendication 14, dans lequel le microcontrôleur calcule la température du fluide sur la base de la vitesse d'ultrasons calculée.

FIG. 1A

FIG. 1B

**FIG. 2A**

**FIG. 2B**

FIG. 2C

**32**

**56**

**50**

**52**

**FIG. 3A**

**50**

**FIG. 3B**

**54**

60    64

62

**FIG. 4A**

60    64

62

**FIG. 4B**

76

78

70

60

28

68

66

**FIG. 5**

FIG. 6

**FIG. 7A**

84

88

86

86

82

**FIG. 7B**

88

84

100

82

**FIG. 7C**

**FIG. 8**

FIG. 9B

FIG. 9A

FIG. 10

FIG. 11

Water Flow

FIG. 12

```
                    Initiate measurement procedure        300
                          (every 0.5 sec.)

No
              If M==0                                      310

                          YES
YES
              If N==0                                      320

                          No
    M=1         Fire Transducer 1 to Transducer 2          330
    N=5                rising edge

                Read and store measurement                340
     325

                          N=N-1                            350


No
              If M==1                                      410

                          YES
YES
              If N==0                                      420

                          No
    M=2         Fire Transducer 2 to Transducer 1          430
    N=5                falling edge

                Read and store measurement                440
     425

                          N=N-1                            450
```

# FIG. 13A

```
                              No ─────────── If M==2
                                               │ YES
                           YES ──────────── If N==0
                                               │ No
                    ┌──────────┐      Fire Transducer 2 to Transducer 1
                    │ M=3      │               rising edge
                    │ N=5      │                  │
                    └──────────┘      Read and store measurement
                                               │
                                            N=N-1 ──────────────────►
```

```
                              No ─────────── If M==3
                                               │ YES
                           YES ──────────── If N==0
                                               │ No
                    ┌──────────┐      Fire transducer 1 to Transducer 2
                    │ M=0      │               falling edge
                    │ N=5      │                  │
                    └──────────┘      Read and store measurement ──────►
                        │
                       625          N=N-1
```

Calculate Result — 700

Procedure end — 710

# FIG. 13B

```
┌─────────────────────────────┐
│   Filter Measurements in Each │  ⌇ 800
│          Sequence            │
└─────────────────────────────┘
               │
               ▼
┌─────────────────────────────┐
│  Calculate Average Upstream and │  ⌇ 810
│   Downstream Time of Flights  │
└─────────────────────────────┘
               │
               ▼
┌─────────────────────────────┐
│                             │  ⌇ 820
│    Calculate Volumetric Flow  │
│                             │
└─────────────────────────────┘
               │
               ▼
┌─────────────────────────────┐
│                             │  ⌇ 830
│  Calculate Ultrasound Velocity │
│                             │
└─────────────────────────────┘
               │
               ▼
┌─────────────────────────────┐
│                             │  ⌇ 840
│  Calculate Fluid Temperature  │
│                             │
└─────────────────────────────┘
```

**FIG. 14**

Rising Edge (M=0)

1-50 ms

Transducer 1

t3 (sensor 2 to sensor 1)
t2 (sensor 2 to sensor 1)
t1 (sensor 2 to sensor 1)

Transducer 2

t3 (sensor 1 to sensor 2)
t2 (sensor 1 to sensor 2)
t1 (sensor 1 to sensor 2)

Falling Edge (M=1)

1-50 ms

Transducer 1

t3 (sensor 2 to sensor 1)
t2 (sensor 2 to sensor 1)
t1 (sensor 2 to sensor 1)

Transducer 2

t3 (sensor 1 to sensor 2)
**t2 (sensor 1 to sensor 2)**
t1 (sensor 1 to sensor 2)

FIG. 15A

EP 3 611 480 B1

# Rising Edge (M=2)

# Falling Edge (M=3)

**FIG. 15B**

EP 3 611 480 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4232548 A